# EUROPEAN PATENT SPECIFICATION

(11) **EP 3 187 754 B1**
(45) Date of publication and mention of the grant of the patent: **28.08.2019**
(21) Application number: 16206241.8
(22) Date of filing: 22.12.2016
(51) Int. Cl.: F16H 59/02, F16H 59/10, F16H 61/24

(54) **SHIFT DETECTION SYSTEM**
VORRICHTUNG ZUR BESTIMMUNG DER SCHALTSTELLUNG
SYSTÈME DE DÉTECTION DE CHANGEMENT DE VITESSE

(30) Priority: 04.01.2016 US 201614987336
(43) Date of publication of application: 05.07.2017
(73) Proprietor: Dura Operating, LLC, Auburn Hills, MI 48326 (US)
(72) Inventor: SEIBOLD, Aaron Christopher, Lako Orion, MI Michigan 48362 (US)
(74) Representative: Bungartz Christophersen mbB

(56) References cited:
- DE-A1- 19 748 115
- JP-A- 2001 301 483
- JP-A- 2002 264 680
- JP-A- 2003 154 869
- US-A1- 2014 256 509
- US-A1- 2014 375 306

## Description

### FIELD

The invention relates generally to a shift detection system for a motor vehicle, and more particularly to a shift detection system having a 2D sensor for detecting a plurality of positions of a shifter lever.

### BACKGROUND

In a motor vehicle equipped with an automatic transmission, a shifter mechanism typically includes a shifter or control lever mounted within the motor vehicle's passenger compartment. The shifter lever is used by an operator of the motor vehicle to select one of a plurality of transmission operating modes. For example, these transmission operating modes may include park (P), reverse (R), neutral (N), drive (D), a low gear or manual mode (M), manual shift up (M+), and manual shift down (M-). To select these modes, the shifter lever may be moved about two axes of rotation - one for the P, R, N, D positions and another for the M, M+, M- positions, also known as an H-shift pattern.

In order to properly command the operating mode of the transmission, it is important to precisely detect the position of the shifter lever. In documents US 2014/0375306 A1, US 2014/0256509 A1, DE 19 197 48 115 A1, JP 2001-301483 A and JP 2002-264680 A methods or devices for detecting the position of shifter levers are described. One solution is to detect the position of the shifter lever using a 3D type Hall-effect sensor which detects the movement of the shifter lever in the X, Y, and Z axes of the sensors. While these systems are useful for their intended purpose, there is a need in the art to reduce the costs associated with the relatively expensive 3D type Hall-effect sensor technology while maintaining the ability to accurately and precisely detect the position of the shifter lever. Document JP 2003-154869 A, which is considered to be the closest prior art, discloses a positioning sensing system for a shifter lever, wherein a first magnet is connected to the shifter lever at an axis of rotation and a second magnet is located separately from the first magnet at a different axis of rotation. Thus, a plurality of magnets and magnetic sensors at different locations are used.

Although such systems are useful for its intended purpose, there is a need in the art to reduce the costs associated with the relatively expensive 3D type hall-effect sensors or associated with the use of a plurality of magnets and magnetic sensors at different locations while maintaining the ability to accurately and precisely detect the position of the shifter lever.

### SUMMARY

A device for detecting the position of a shifter lever in a motor vehicle is provided. The shifter lever is rotatably movable around a pivot axis and translationally moveable in a direction generally perpendicular to the pivot axis. The device includes a 2D magnetic sensor. In order to reduce the costs of production as well as materials and component costs associated with the use of a plurality of magnets at different locations, while - at the same time - maintaining the ability to accurately and precisely detect the position of the shifter lever a dual magnet is coupled to the shifter lever at the pivot point and disposed proximate the 2D magnetic sensor. The dual magnet has a first magnet and a second magnet. The first magnet has a first pole pair and the second magnet has a second pole pair. The first pole pair is circumferentially offset from the second pole pair.

In one aspect, the dual magnet is generally cylindrically shaped and the first pole pair is circumferentially offset from the second pole pair.

In another aspect, the first pole pair is offset from the second pole pair by approximately 180 degrees so that the magnetic field of the first pole pair is substantially reversed relative to the magnetic field of the second pole pair.

In another aspect, the first magnet includes a first N-pole and a first S-pole, the second magnet includes a second N-pole and a second S-pole, and the first N-pole is directly axially adjacent the second S-pole and the first S-pole is directly axially adjacent the second N-pole.

In another aspect, the 2D magnetic sensor is a Hall effect sensor or a giant magneto-resistive sensor.

In another aspect, the first pole pair is circumferentially offset from the second pole pair by approximately 25 degrees to approximately 45 degrees.

In another aspect, the 2D magnetic sensor is an anisotropic magneto-resistive sensor.

In another aspect, the first magnet is disposed axially adjacent the second magnet.

In another aspect, the first and second magnets are disposed on a first cylindrical half of the dual magnet.

In another aspect, the 2D sensor is configured to sense a movement of the dual magnet in both a rotational and a translational direction.

In another aspect, the dual magnet is coaxial with the pivot axis of the shifter lever.

A shifter assembly for a motor vehicle is also provided. The shifter assembly includes a housing, a shifter lever having a pivot point that defines an axis, wherein the shifter lever is configured to pivot about the axis and to translate along the axis, a dual magnet connected to the shifter lever at the pivot point, the dual magnet having a first magnet and a second magnet, the first magnet having a first pole pair and the second magnet having a second pole pair, wherein the first pole pair is offset from the second pole pair, and a 2D sensor connected to the housing and disposed proximate the dual magnet, wherein the 2D sensor is configured to sense a change of position of the dual magnet as the shifter lever pivots or translates.

In one aspect, the 2D sensor detects a change in a magnetic field as the dual magnet is pivoted or translated by the shifter lever.

In another aspect, the translation and pivoting of the shifter lever corresponds to one of a P, R, N, D, M+, M, and M- positions.

In another aspect, the dual magnet is generally cylindrically shaped and the first pole pair is offset from the second pole pair by approximately 180 degrees such that the magnetic field of the first pole pair is substantially reversed relative to the magnetic field of the second pole pair.

In another aspect, the first magnet includes a first N-pole and a first S-pole, the second magnet includes a second N-pole and a second S-pole, and the first N-pole is directly axially adjacent the second S-pole and the first S-pole is directly axially adjacent the second N-pole.

In another aspect, the 2D magnetic sensor is a Hall effect sensor or a giant magneto-resistive sensor.

In another aspect, the first pole pair is circumferentially offset from the second pole pair by approximately 25 degrees to approximately 45 degrees and the 2D magnetic sensor is an anisotropic magneto-resistive sensor.

In another aspect, the 2D sensor is in communication with an electronic controller.

Another shifter assembly for a motor vehicle is provided. The shifter assembly includes a housing, a shifter lever having a pivot point that defines an axis, wherein the shifter lever is configured to pivot about the axis and to translate along the axis to one of a P, R, N, D, M+, M, and M- positions, a cylindrical dual magnet connected to the shifter lever at the pivot point, the cylindrical dual magnet having a first magnet and a second magnet each disposed on a first half of the cylindrical dual magnet, the first magnet having a first pole pair and the second magnet having a second pole pair, wherein the first pole pair is offset from the second pole pair, and a 2D sensor connected to the housing and disposed proximate the dual magnet, wherein the 2D sensor is configured to sense a change of position of the dual magnet as the shifter lever pivots or translates.

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is a side perspective view of an example of a shift detection system employed with an exemplary shifter assembly;
FIG. 2 is a top perspective view of the shift detection system;
FIG. 3 is an end view of the shift detection system; and
FIG. 4 is a top perspective view of another example of a shift detection system.

### DETAILED DESCRIPTION

The following description is merely exemplary in nature and is not intended to limit the present disclosure, application, or uses.

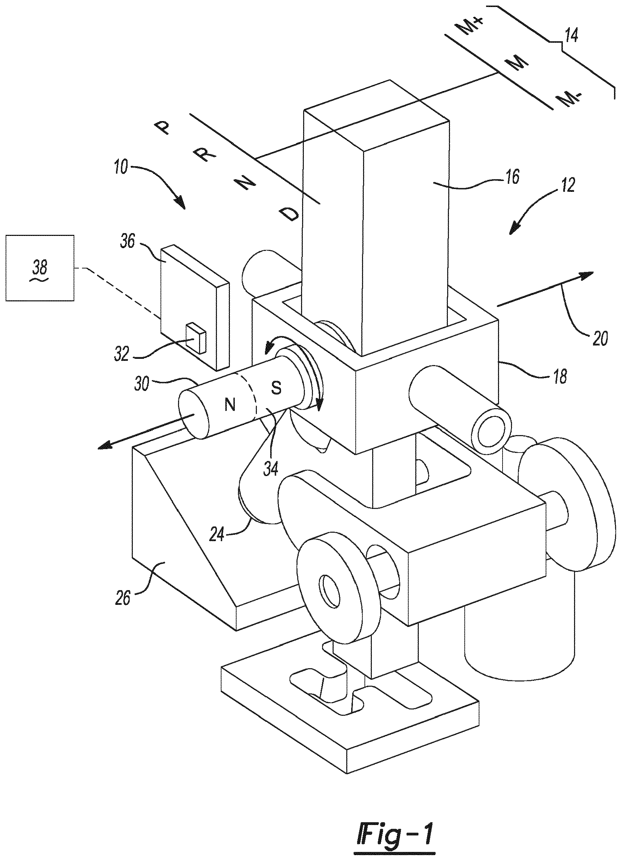

With reference to FIG. 1, a shift detection device is generally indicated by reference number 10. The shift detection device 10 is employed with an exemplary shifter assembly 12 mounted within a motor vehicle (not shown). The shifter assembly 12 is controlled by an operator of the motor vehicle to select one of a plurality of shift positions, indicated by the H-gate shift pattern 14. Each of the shift positions corresponds to an operating mode of a transmission (not shown) associated with the motor vehicle. In the example provided, the H-gate shift pattern 14 includes a park (P), reverse (R), neutral (N), drive (D), a manual mode (M), manual shift up (M+), and manual shift down (M-). It should be appreciated that the number of shift positions, as well as the associated transmission operating mode, may vary without departing from the scope of the present example. For example, the manual modes M, M+, and M-may be replaced with high gear and low gear operating modes.

The shifter assembly 12 generally includes a shifter lever 16 mounted to a support collar 18. The shifter lever 16 is capable of translating along a pivot axis 20 and is capable of pivoting about the pivot axis 20. Various ways of mounting the shifter lever 16 within the shifter assembly 12 in order to allow the shifter lever 16 to pivot and translate may be used without departing from the scope of the present example. The shifter lever 16 includes a detent arm 22 that engages a plurality of detents 24, only one of which is shown, formed in a base 26. The detents 24 are positioned in the base 26 to provide a mechanical detent to each of the plurality of shift positions in the H-gate shift pattern 14. The selection of the P, R, N, D positions are achieved by pivoting the shifter lever 16 when the shifter lever 16 is translated cross-car to the left. The selection of the M, M+, M- positions are achieved by pivoting the shifter lever 16 when the shifter lever 16 is translated cross-car to the right.

The shift detection system 10 is operable to detect the shift position of the shifter lever 16 as it is translated and pivoted in the H-gate shift pattern 14. The shift detection system 10 includes a dual magnet 30 and a 2D magnetic sensor 32. The dual magnet 30 is connected to the shifter lever 16 at a pivot point 34 of the shifter lever 16. Thus, the dual magnet 30 is concentric to the pivot axis 20. Translation of the shifter lever 16 results in translation of the dual magnet 30 along the axis 20 while pivoting of the shifter lever 16 results in rotation of the dual magnet 30 about the axis 20. The 2D magnetic sensor 32 is mounted on a fixed member or housing 36 proximate the shift lever 16. The 2D magnetic sensor 32 may be positioned in close proximity to the dual magnet 30.

The 2D sensor 32 is configured to only measure the rotations of the magnetic field produced by the dual magnet 30. In one example, the 2D magnetic sensor 32 is preferably a 2D Hall-effect sensor or a giant magneto-resistive sensor. In another example, the 2D magnetic sensor 32 is preferably an anisotropic magneto-resistive sensor. The type of 2D magnetic sensor employed is dependent on the configuration of the dual magnet 30, as will be described below. The 2D magnetic sensor 32 may be in electronic communication with a controller 38. The controller 38 is a non-generalized, electronic control device having a preprogrammed digital computer or processor, memory or non-transitory computer readable medium used to store data such as control logic or instructions, and at least one I/O peripheral. The processor is configured to execute the control logic or instructions. In one example, the controller 38 is a transmission control module operable configured to control the associated transmission based on data signals sent from the 2D magnetic sensor 32 indicative of the position of the shift lever 16. Thus, if the 2D magnetic sensor 32 communicates data to the controller 38 that the shift lever 16 is in the park position, then the controller 38 commands the transmission into a park mode of operation. Alternatively, the controller 38 may be a separate unit from the transmission control module or be integrated with another motor vehicle control module, such as an engine control module, body control module, etc.

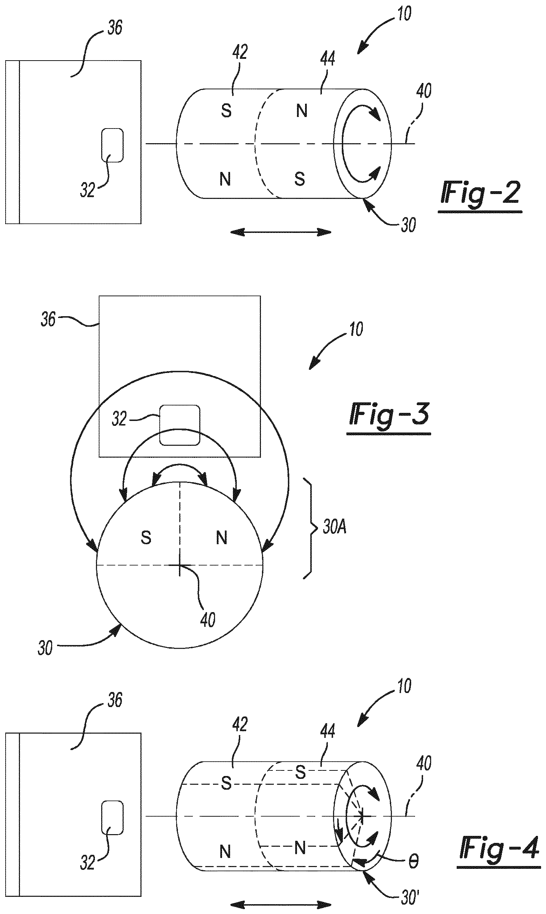

Turning now to FIG. 2, and with continued reference to FIG. 1, the dual magnet 30 is generally cylindrical in shape having a longitudinal axis 40. The dual magnet 30 includes a first magnet 42 and a second magnet 44. The first magnet 42 has a first pole pair with a first North pole (N-pole) and a first South pole (S-pole). The second magnet has a second pole pair with a second N-pole and a second S-pole. The first magnet 42 is disposed axially adjacent the second magnet 44. However, the second magnet 44 is flipped 180 degrees relative to the first magnet 42 such that the first N-pole is directly axially adjacent the second S-pole and the first S-pole is directly axially adjacent the second N-pole. Thus the first magnet 42 produces a magnetic field that is oriented in a reverse direction relative to a magnetic field produced by the second magnet 44. In this configuration of the dual magnet 30, the 2D magnetic sensor 32 is a 2D Hall-effect sensor or a giant magneto-resistive sensor.

Referring now to FIG. 3, the first and second magnets 42, 44 are disposed on a first cylindrical half 30A of the dual magnet 30. Thus, the magnetic field produced by each of the first and second magnets 42, 44 extends above the first cylindrical half 30A. The 2D magnetic sensor 32 is preferably located so that the 2D magnetic sensor 32 is centered on the longitudinal axis 40 and above the first cylindrical half 30A.

With combined reference to FIGS. 1-3, to select a shift position, an operator of the motor vehicle moves the shifter lever 16 within the H-gate shift patter 14 to one of the P, R, N, D and M, M+, M- shift positions. Translation of the shifter lever 16 cross-car between the left position (corresponding to the P, R, N, D positions) and right position (corresponding to the M, M+, M- positions) switches which of the first and second magnets 42, 44 is closer to the 2D magnetic sensor 32. Due to the reverse magnetic fields produced by the first and second magnets 42, 44, the 2D magnetic sensor 32 is able to detect which of the first and second magnets 42, 44 is closer to the 2D magnetic sensor 32. As the shifter lever 16 is then pivoted to one of the shift positions in the H-gate shift pattern 14, the 2D magnetic sensor 32 detects the rotation of the magnetic fields as the dual magnet 30 rotates with the shifter lever 16. Each shift position in the H-gate shift pattern 14 has associated with it a particular magnetic field orientation and rotation. Thus, the controller 38 is able to determine the position of the shifter lever 16 based on the rotation of the magnetic field of whichever of the first and second magnets 42, 44 is closer to the 2D magnetic sensor 32. This information is then used to command the associated operating mode to the transmission of the motor vehicle.

Turning to FIG. 4, an alternate dual magnet configuration is indicated by reference number 30'. The dual magnet 30' also includes the first magnet 42 and the second magnet 44. However, the first and second magnets 42, 44 have a different orientation than that of the dual magnet 30 shown in FIGS. 1-3. In the dual magnet 30', the first and second magnets 42, 44 have first and second N-S pole pairs, however, the second magnet 44 is circumferentially offset from the first magnet 42 by an angle theta. Angle theta is measured relative to the longitudinal axis 40 and is the angle between a fixed point of the first N-pole of the first magnet 42 and a corresponding fixed point on the second N-pole of the second magnet 44. Alternatively, angle theta may be the angle between a fixed point of the first S-pole of the first magnet 42 and a corresponding fixed point on the second S-pole of the second magnet 44. In a preferred example, angle theta is approximately 25 degrees to approximately 45 degrees. In this configuration, the 2D magnetic sensor 32 is preferably an anisotropic magneto-resistive sensor. The dual magnet 30' operates in substantially the same manner as the dual magnet 30. However, by circumferentially offsetting the first and second magnets 42, 44, the 2D magnetic sensor 32 detects a wider range of magnetic field rotations such that each of the shift positions in the H-gate shift pattern 14 is associated with a unique field rotation.

## Claims

1. A device for detecting the position of a shifter lever (16) in a motor vehicle, the shifter lever (16) rotatably movable around a pivot axis (20) and translationally moveable in a direction along the axis (20), the device comprising:
a 2D magnetic sensor (32); and
a dual magnet (30, 30') coupled to the shifter lever (16) at a pivot point (34) and disposed proximate the 2D magnetic sensor (32), the dual magnet (30, 30') having a first magnet and a second magnet, the first magnet (42) having a first pole pair and the second magnet (44) having a second pole pair, wherein the first pole pair is circumferentially offset from the second pole pair.

2. The device of claim 1 wherein the dual magnet (30, 30') is generally cylindrically shaped and the first pole pair is circumferentially offset from the second pole pair by approximately 25 degrees to approximately 45 degrees.

3. The device of claim 1 or claim 2 wherein the first pole pair is offset from the second pole pair by approximately 180 degrees so that the magnetic field of the first pole pair is substantially reversed relative to the magnetic field of the second pole pair.

4. The device of any one of the preceding claims wherein the first magnet (42) includes a first N-pole and a first S-pole, the second magnet (44) includes a second N-pole and a second S-pole, and the first N-pole is directly axially adjacent the second S-pole and the first S-pole is directly axially adjacent the second N-pole.

5. The device of any one of the preceding claims wherein the 2D magnetic sensor (32) is a Hall effect sensor or a giant magneto-resistive sensor or an anisotropic magneto-resistive sensor.

6. The device of any one of the preceding claims wherein the first magnet (42) is disposed axially adjacent the second magnet (44).

7. The device of any one of the preceding claims wherein the first and second magnets (42, 44) are disposed on a first cylindrical half of the dual magnet (30, 30').

8. The device of any one of the preceding claims wherein the 2D magnetic sensor (32) is configured to sense a rotation of the dual magnet (30, 30') about the pivot axis (20) and a translation of the dual magnet (30, 30') along the pivot axis (20).

9. The device of any one of the preceding claims wherein the dual magnet (30, 30') is coaxial with the pivot axis (20) of the shifter lever (16).

10. A shifter assembly (12) for a motor vehicle comprising:
a housing (36);
a shifter lever (16) having a pivot point (34) that defines an axis (20), wherein the shifter lever (16) is configured to pivot about the axis (20) and to translate along the axis (20);
a dual magnet connected to the shifter lever (16) at the pivot point (34), the dual magnet (30, 30') having a first magnet (42) and a second magnet (44), the first magnet (42) having a first pole pair and the second magnet (44) having a second pole pair, wherein the first pole pair is circumferentially offset from the second pole pair; and
a 2D magnetic sensor (32) connected to the housing (36) and disposed proximate the dual magnet (30, 30'), wherein the 2D magnetic sensor (32) is configured to sense a change of position of the dual magnet (30, 30') as the shifter lever (16) pivots or translates.

11. The shifter assembly of claim 10 wherein the 2D magnetic sensor (32) detects a change in a magnetic field as the dual magnet (30, 30') is pivoted or translated by the shifter lever (16).

12. The shifter assembly of claim 10 or 11 wherein the translation and pivoting of the shifter lever (16) corresponds to one of a P, R, N, D, M+, M, and M- positions.

13. The shifter assembly of any one of the claims 10 to 12 in combination with a device for detecting the position of a shifter lever (16) in a motor vehicle according to any one of the claims 1 to 9.

14. The shifter assembly of any of the claims 10 to 13 wherein the 2D magnetic sensor (32) is in communication with an electronic controller (38).

15. A shifter assembly for a motor vehicle comprising:
a housing (36);
a shifter lever (16) having a pivot point (34) that defines an axis (20), wherein the shifter lever (16) is configured to pivot about the axis (20) and to translate along the axis (20) to one of a P, R, N, D, M+, M, and M- positions;
a cylindrical dual magnet (30, 30') connected to the shifter lever (16) at the pivot point (34), the cylindrical dual magnet (30, 30') having a first magnet (42) and a second magnet (44) each disposed on a first half of the cylindrical dual magnet (30, 30'), the first magnet (42) having a first pole pair and the second magnet (44) having a second pole pair, wherein the first pole pair is circumferentially offset from the second pole pair; and
a 2D magnetic sensor (32) connected to the housing (36) and disposed proximate the dual magnet (30, 30'), wherein the 2D magnetic sensor (32) is configured to sense a change of position of the dual magnet (30, 30') as the shifter lever (16) pivots or translates.

## Patentansprüche

1. Vorrichtung zum Erfassen der Position eines Schalthebels (16) in einem Kraftfahrzeug, wobei der Schalthebel (16) drehbar um eine Drehachse (20) beweglich und in einer Richtung entlang der Achse (20) translatorisch beweglich ist, wobei die Vorrichtung umfasst:
einen 2D-Magnetsensor (32);
und einen Doppelmagneten (30, 30'), der mit dem Schalthebel (16) an einem Drehpunkt (34) gekoppelt und in der Nähe des 2D-Magnetsensors (32) angeordnet ist, wobei der Doppelmagnet (30, 30') einen ersten Magneten und einen zweiten Magneten aufweist, wobei der erste Magnet (42) ein erstes Polpaar und der zweite Magnet (44) ein zweites Polpaar aufweist, wobei das erste Polpaar in Umfangsrichtung vom zweiten Polpaar versetzt ist.

2. Vorrichtung nach Anspruch 1, wobei der Doppelmagnet (30, 30') im Allgemeinen zylinderförmig ausgebildet ist und das erste Polpaar in Umfangsrichtung um etwa 25 Grad bis etwa 45 Grad vom zweiten Polpaar versetzt ist

3. Vorrichtung nach Anspruch 1 oder Anspruch 2, wobei das erste Polpaar gegenüber dem zweiten Polpaar um etwa 180 Grad versetzt ist, sodass das Magnetfeld des ersten Polpaares im Wesentlichen gegenüber dem Magnetfeld des zweiten Polpaares umgekehrt ist.

4. Vorrichtung nach einem der vorhergehenden Ansprüche, wobei der erste Magnet (42) einen ersten N-Pol und einen ersten S-Pol beinhaltet, der zweite Magnet (44) einen zweiten N-Pol und einen zweiten S-Pol beinhaltet und der erste N-Pol direkt axial an den zweiten S-Pol angrenzt und der erste S-Pol direkt axial an den zweiten N-Pol angrenzt.

5. Vorrichtung nach einem der vorhergehenden Ansprüche, wobei der 2D-Magnetsensor (32) ein Halleffekt-Sensor oder ein Riesenmagnetowiderstandssensor oder ein anisotroper Magnetowiderstandssensor ist.

6. Vorrichtung nach einem der vorhergehenden Ansprüche, wobei der erste Magnet (42) axial angrenzend an den zweiten Magneten (44) angeordnet ist.

7. Vorrichtung nach einem der vorhergehenden Ansprüche, wobei der erste und zweite Magnet (42, 44) auf einer ersten zylindrischen Hälfte des Doppelmagneten (30, 30') angeordnet sind.

8. Vorrichtung nach einem der vorhergehenden Ansprüche, wobei der 2D-Magnetsensor (32) dazu eingerichtet ist, eine Drehung des Doppelmagneten (30, 30') um die Drehachse (20) und eine Verschiebung des Doppelmagneten (30, 30') entlang der Drehachse (20) zu erfassen.

9. Vorrichtung nach einem der vorhergehenden Ansprüche, wobei der Doppelmagnet (30, 30') koaxial zur Drehachse (20) des Schalthebels (16) ist.

10. Schaltanordnung (12) für ein Kraftfahrzeug, umfassend:
ein Gehäuse (36);
einen Schalthebel (16) mit einem Drehpunkt (34), der eine Achse (20) definiert, wobei der Schalthebel (16) dazu eingerichtet ist, um die Achse (20) zu drehen und entlang der Achse (20) zu verschieben;
einen Doppelmagneten, der mit dem Schalthebel (16) am Drehpunkt (34) verbunden ist, wobei der Doppelmagnet (30, 30') einen ersten Magneten (42) und einen zweiten Magneten (44) aufweist, wobei der erste Magnet (42) ein erstes Polpaar und der zweite Magnet (44) ein zweites Polpaar aufweist, wobei das erste Polpaar in Umfangsrichtung gegenüber dem zweiten Polpaar versetzt ist;
und einen 2D-Magnetsensor (32), der mit dem Gehäuse (36) verbunden und in der Nähe des Doppelmagneten (30, 30') angeordnet ist, wobei der 2D-Magnetsensor (32) dazu eingerichtet ist, eine Positionsänderung des Doppelmagneten (30, 30') zu erfassen, wenn der Schalthebel (16) sich dreht oder verschiebt.

11. Schaltanordnung nach Anspruch 10, wobei der 2D-Magnetsensor (32) eine Änderung in einem Magnetfeld erfasst, wenn der Doppelmagnet (30, 30') durch den Schalthebel (16) gedreht oder verschoben wird.

12. Schaltanordnung nach Anspruch 10 oder 11, wobei die Verschiebung und Drehung des Schalthebels (16) einer der Positionen P, R, N, D, M+, M und M-entspricht.

13. Schaltanordnung nach einem der Ansprüche 10 bis 12 in Kombination mit einer Vorrichtung zum Erfassen der Position eines Schalthebels (16) in einem Kraftfahrzeug nach einem der Ansprüche 1 bis 9.

14. Schaltanordnung nach einem der Ansprüche 10 bis 13, wobei der 2D-Magnetsensor (32) in Kommunikation mit einer elektronischen Steuerung (38) steht.

15. Schaltanordnung für ein Kraftfahrzeug, umfassend:
ein Gehäuse (36);
einen Schalthebel (16) mit einem Drehpunkt (34), der eine Achse (20) definiert, wobei der Schalthebel (16) dazu eingerichtet ist, um die Achse (20) zu drehen und entlang der Achse (20) in eine der Positionen P, R, N, D, M+, M und M- zu verschieben;
einen zylindrischen Doppelmagneten (30, 30'), der mit dem Schalthebel (16) am Drehpunkt (34) verbunden ist, wobei der zylindrische Doppelmagnet (30, 30') einen ersten Magneten (42) und einen zweiten Magneten (44) aufweist, die jeweils auf einer ersten Hälfte des zylindrischen Doppelmagneten (30, 30') angeordnet sind, wobei der erste Magnet (42) ein erstes Polpaar und der zweite Magnet (44) ein zweites Polpaar aufweist, wobei das erste Polpaar in Umfangsrichtung gegenüber dem zweiten Polpaar versetzt ist;
und einen 2D-Magnetsensor (32), der mit dem Gehäuse (36) verbunden und in der Nähe des Doppelmagneten (30, 30') angeordnet ist, wobei der 2D-Magnetsensor (32) dazu eingerichtet ist, eine Positionsänderung des Doppelmagneten (30, 30') zu erfassen, wenn der Schalthebel (16) sich dreht oder verschiebt.

## Revendications

1. Dispositif destiné à la détection de la position d'un levier de changement de vitesses (16) dans un véhicule automobile, le levier de changement de vitesses (16) pouvant se déplacer de manière rotative autour d'un axe de pivotement (20) et pouvant se déplacer en translation selon une direction le long de l'axe (20), le dispositif comprenant :
un capteur magnétique bidimensionnel (2D) (32) ;
et un double aimant (30, 30') couplé au levier de changement de vitesses (16) au niveau d'un point de pivot (34) et disposé à proximité du capteur magnétique 2D (32), le double aimant (30, 30') possédant un premier aimant et un second aimant, le premier aimant (42) possédant une première paire de pôles et le second aimant (44) possédant une seconde paire de pôles, ladite première paire de pôles étant décalée circonférentiellement par rapport à la seconde paire de pôles.

2. Dispositif selon la revendication 1, ledit double aimant (30, 30') étant de forme généralement cylindrique et ladite première paire de pôles étant décalée circonférentiellement d'environ 25 degrés à environ 45 degrés par rapport à la seconde paire de pôles.

3. Dispositif selon la revendication 1 ou 2, ladite première paire de pôles étant décalée d'approximativement 180 degrés par rapport à la seconde paire de pôles afin que le champ magnétique de la première paire de pôles soit sensiblement inversé par rapport au champ magnétique de la seconde paire de pôles.

4. Dispositif selon l'une quelconque des revendications précédentes, ledit premier aimant (42) comprenant un premier pôle N et un premier pôle S, ledit second aimant (44) comprenant un second pôle N et un second pôle S, et ledit premier pôle N étant directement adjacent axialement au second pôle S et ledit premier pôle S étant directement adjacent axialement au second pôle N.

5. Dispositif selon l'une quelconque des revendications précédentes, ledit capteur magnétique 2D (32) étant un capteur à effet Hall ou un capteur à magnétorésistance géante ou un capteur à magnétorésistance anisotrope.

6. Dispositif selon l'une quelconque des revendications précédentes, ledit premier aimant (42) étant disposé adjacent axialement au second aimant (44).

7. Dispositif selon l'une quelconque des revendications précédentes, lesdits premier et second aimants (42, 44) étant disposés sur une première moitié cylindrique du double aimant (30, 30').

8. Dispositif selon l'une quelconque des revendications précédentes, ledit capteur magnétique 2D (32) étant conçu pour détecter une rotation du double aimant (30, 30') autour de l'axe de pivotement (20) et une translation du double aimant (30, 30') le long de l'axe de pivotement (20).

9. Dispositif selon l'une quelconque des revendications précédentes, ledit double aimant (30, 30') étant coaxial à l'axe de pivotement (20) du levier de changement de vitesses (16).

10. Ensemble de changement de vitesses (12) pour un véhicule automobile comprenant :
un boîtier (36) ;
un levier de changement de vitesses (16) possédant un point de pivotement (34) qui définit un axe (20), ledit levier de changement de vitesses (16) étant conçu pour pivoter autour de l'axe (20) et pour effectuer une translation le long de l'axe (20) ;
un double aimant raccordé au levier de changement de vitesses (16) au niveau du point de pivotement (34), le double aimant (30, 30') possédant un premier aimant (42) et un second aimant (44), le premier aimant (42) possédant une première paire de pôles et le second aimant (44) possédant une seconde paire de pôles, ladite première paire de pôles étant décalée circonférentiellement par rapport à la seconde paire de pôles ;
et un capteur magnétique 2D (32) raccordé au boîtier (36) et disposé à proximité du double aimant (30, 30'), ledit capteur magnétique 2D (32) étant conçu pour détecter un changement de position du double aimant (30, 30') lorsque le levier de changement de vitesses (16) pivote ou effectue une translation.

11. Ensemble de changement de vitesses selon la revendication 10, ledit capteur magnétique 2D (32) détectant un changement dans le champ magnétique lorsque le double aimant (30, 30') pivote ou effectue une translation au moyen du levier de changement de vitesses (16).

12. Ensemble de changement de vitesses selon la revendication 10 ou 11, dans lequel la translation et le pivotement du levier de changement de vitesses (16) correspondent à l'une des positions P, R, N, D, M +, M et M-.

13. Ensemble de changement de vitesses selon l'une quelconque des revendications 10 à 12, en combinaison avec un dispositif destiné à détecter la position d'un levier de changement de vitesses (16) dans un véhicule automobile selon l'une quelconque des revendications 1 à 9.

14. Ensemble de changement de vitesses selon l'une quelconque des revendications 10 à 13, ledit capteur magnétique 2D (32) étant en communication avec un dispositif de commande électronique (38).

15. Ensemble de changement de vitesses pour un véhicule automobile comprenant :
un boîtier (36) ;
un levier de changement de vitesses (16) possédant un point de pivotement (34) qui définit un axe (20), ledit levier de changement de vitesses (16) étant conçu pour pivoter autour de l'axe (20) et pour effectuer une translation le long de l'axe (20) vers l'une des position P, R, N, D, M+, M et M- ;
un double aimant cylindrique (30, 30') relié au levier de changement de vitesses (16) au niveau du point de pivotement (34), le double aimant cylindrique (30, 30') possédant un premier aimant (42) et un second aimant (44) disposés chacun sur une première moitié du double aimant cylindrique (30, 30'), le premier aimant (42) possédant une première paire de pôles et le second aimant (44) possédant une seconde paire de pôles, ladite première paire de pôles étant décalée circonférentiellement de la seconde paire de pôles ;
et un capteur magnétique 2D (32) raccordé au boîtier (36) et disposé à proximité du double aimant (30, 30'), ledit capteur magnétique 2D (32) étant conçu pour détecter un changement de position du double aimant (30, 30') lorsque le levier de changement de vitesses (16) pivote ou effectue une translation.
